# EUROPEAN PATENT SPECIFICATION

(11) **EP 0 325 470 B1**
(45) Date of publication and mention of the grant of the patent: **03.08.1994**
(21) Application number: 89300531.4
(22) Date of filing: 20.01.1989
(51) Int. Cl.: F16L 11/08, B29D 23/22

(54) **Tubes for peristaltic pumps and methods of making them**
Schläuche für peristaltische Pumpen und Verfahren zu ihrer Herstellung
Tuyaux pour pompes peristaltiques et méthode de fabrication

(30) Priority: 22.01.1988 GB 8801484
(43) Date of publication of application: 26.07.1989
(73) Proprietor: AVON POLYMER PRODUCTS LIMITED, Melksham Wiltshire SN12 8AA (GB)
(72) Inventor: Boast, David, Chippenham Wiltshire (GB); Turner, Donald Milne, Lansdown Bath Avon (GB)
(74) Representative: Harrison, David Christopher

(56) References cited:
- EP-A- 0 095 632
- DE-A- 3 327 669
- GB-A- 1 007 229

## Description

This invention relates to tubes for peristaltic pumps and methods of making those tubes.

They are subjected to extreme and repeated stress as they are progressively flattened and then released by the impellers of the pump. They also have very special requirements for the inner and outer portions of the tube: the inner must have the capacity to seal over and around lumps in the material being pumped and the outer must resist the rolling wear of the impeller acting on it and to restore the tube to its round section after passage of each impeller.

Such tubes have to be reinforced to resist the stretching effect of the impellers. In the prior art they have been made, usually in a continuous process, by extrusion of a first sleeve of uncured rubber to form the inner portion, the winding-on to it of a single reinforcement cord at an angle, application of a thin layer of rubber, the winding-on of a second single reinforcement cord at an opposite equal angel, application of a further third layer of rubber and then third and fourth layers of single cord with an intermediate rubber layer between them and finally application of a second sleeve to form the outer portion of the tube: followed by curing of them all together.

Throughout this specification "rubber" includes both natural and synthetic rubbers and other elastomers having rubber-like properties.

The third and fourth layers of cord are in practical terms essential because none of the layers can be wound on at a sufficient density to provide a necessary resistance, at least not without serious risk of contact within the layer, which would cause rapid failure of the cord. Also, the interposition of rubber layers imposes a minimum on the radial thickness of the reinforcement, considered as a whole, resulting in high stresses at the boundaries of the reinforcement: these in turn tend to cause separation of the cords from the adjacent rubber. This effect is increased by the conventional disposition of the tube in a semicircle in the pump.

We aim to solve the problems caused by the use of single wound-on cord by using instead the product we call "tyrecord". This is a pre-prepared essentially laminar product in which parallel cords are laid side by side at high density but not in contact, each surrounded by a curable rubber. This is a standard material in the manufacture of tyres.

In GB-A-1007229 it has been proposed, particularly with reference to Figure 3, to use tyrecord as helical reinforcing windings in the manufacture of a hose. This document and EP-A-0095632 are examples of disclosures of processes for forming reinforced tubes with opposed helical windings.

The present invention takes advantage of the nature of tyrecord in the manufacture and structure of tubes for peristaltic pumps. Because of the nature of tyrecord i) a high density of cords is achieved in each reinforcement layer without risk of contact and ii) there may be no need for an intermediate rubber layer.

In one aspect, the invention provides the use of a tube having opposed helical reinforcing layers of tyrecord between inner and outer rubber layers, as the peristaltic tube of a peristaltic pump: it also provides a pump equipped with such a tube acted on by its impeller(s).

In making tubes for most peristaltic pump tubes two and only two tyrecord layers will be applied over a rubber inner layer, because of the high cord density that is available. Then an outer layer is applied and the whole cured together. Curing under compression may be achieved by shrink-wrapping the assembly, including the mandrel. The inner layer will usually be extruded, the outer formed by wrapping of individual sheets to the desired thickness.

True of the outer surface is important and will preferably be achieved by grinding after the cure.

As is apparent, the nature of this process is particularly adapted to batch processes, producing tube of desired single unit lengths.

Because of the strength and versatility available within the reinforcement part of the tube, we have freedom to design the relative characteristics of the inner and outer layers, in particular in relation to their thicknesses for the special purposes of peristaltic pumps. Accordingly, the use and the pump of the invention may be characterised in that the radial thickness of inner layer (i.e. all within the reinforcement) to outer layer (all outside the reinforcement) is in the range between 0.2:1 to 2:1, an optimum being achieved around 0.65:1.

In the accompanying drawings:
Figures 1-4 are perspective views showing successive stages in an assembly process; and
Figure 5 is a cross section through a tyrecord as employed in this invention.

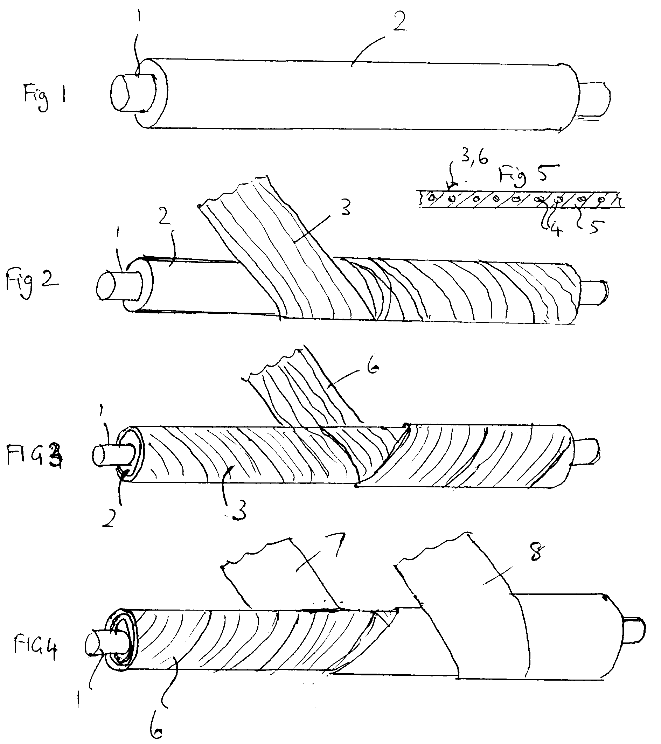

As seen in Figure 1 an extruded tube 2 of uncured rubber is forced over a mandrel 1. This tube 2 will form the inner layer of the peristaltic pump tube which is to be formed.

Figure 2 shows a first length of tyrecord 3 being laid at a desired angle (55° to the axis is conventional, but any suitable one can be used) around the tube 2 progressively from one end to the other. A liquid bonding agent may be interposed between the tube and tyrecord.

Next, as seen in Figure 3 and optionally after application of another layer of liquid bonding agent, a second length 6 of tyrecord is applied at an equal and opposite angle to length 3.

Then as seen in Figure 4 one or more layers of uncured unreinforced rubber 7,8 are applied over the layer 6 of tyrecord to build an outer layer of desired thickness.

Figure 5 shows how tyrecord comprises cords 4 (which may be yarns, threads, monofilaments or wires) which are embedded side by side but out of contact with each other in a matrix 5 of uncured rubber. This matrix has major surfaces uninterrupted by the cords and which are therefore apt for direct contact with the other layer of tyrecord and the inner tube or outer layer, as the case may be.

The whole assembly is now cured together in a suitable mould, which for ease of manufacture may be a shrink-wrap package. Because it is desirable that the outer surface of the tube shall be very true it is desirable, certainly if a shrink-wrap mould were used, to grind the now cured outer surface after moulding.

The product is a tube for a peristaltic pump which has less tendency than prior art tubes towards separation of its various layers due to the extreme thinness of the reinforcement, which in turn is due to the availability of any chosen high end density of the cords in the reinforcing medium, tyrecord, which is used.

Because of this, much greater freedom is available to the designer regarding absolute and relative thicknesses of the inner and outer layers; we find that ratios of between 2:1 and about 0.2:1, especially 0.65:1, inner : outer are achievable and give superior results.

## Claims

1. The use of a tube having an inner rubber layer (2), an outer layer (8) and a reinforcement (3,6) between them, the reinforcement (3,6) being provided by at least two layers of tyrecord wound in opposite helices, as the tube of a peristaltic pump acted on by the peristaltic impeller(s) of such a pump.

2. The use according to claim 1 wherein the outer layer of the tube comprises two layers of unreinforced rubber, one layer being formed by winding a length (7) of unreinforced rubber onto the outermost layer (6) of tyrecord, the second layer being formed by helically opposed winding a length (8) of unreinforced rubber on the first (7).

3. The use according to claim 1 or claim 2 wherein the inner layer (2) of the tube is formed by extrusion.

4. The use according to any one of the preceding claims wherein in the tube the ratio of the radial thickness of the inner layer within the reinforcement to the sum radial thickness of the outer layer or layers outside the reinforcement is between 0.2:1 and 2:1.

5. The use according to claim 4 wherein the ratio is between 0.65:1 and 2:1.

6. The use according to any one of the preceding claims wherein there is no intervening rubber layer between successively opposite helical windings of tyrecord (3,6).

7. The use according to any one of the preceding claims wherein the outer layer has been trued by grinding.

8. A peristaltic pump incorporating as a tube acted on by its impeller(s), a tube having an inner rubber layer (2), an outer layer (8) and a reinforcement (3,6) between them, the reinforcement (3,6) being provided by at least two layers of tyrecord wound in opposite helices.

9. A peristaltic pump according to claim 8 wherein in the tube the ratio of the radial thickness of the inner layer within the reinforcement to the sum radial thickness of the outer layer or layers outside the reinforcement is between 0.2:1 and 2:1.

10. A peristaltic pump according to claim 9 wherein the said ratio is between 0.65:1 and 2:1.

## Patentansprüche

1. Verwendung eines Schlauchs mit einer inneren Gummischicht (2), einer Außenschicht (8) und einer Verstärkung (3, 6) dazwischen, wobei die Verstärkung (3, 6) durch zumindest zwei Schichten von, in entgegengesetzten Windungen gewickelten, Reifencord gebildet wird, als Schlauch einer peristaltischen Pumpe, auf den die Schlauchquetschvorrichtung(en) einer derartigen Pumpe wirkt/wirken.

2. Verwendung nach Anspruch 1, worin die Außenschicht des Schlauchs zwei Schichten unverstärkten Gummis umfaßt, wobei eine Schicht durch Wickeln einer Länge (7) unverstärkten Gummis um die äußerste Schicht (6) Reifencord und die zweite Schicht durch entgegengesetzt gewundenes Wickeln einer Länge (8) unverstärkten Gummis um die erste (7) gebildet wird.

3. Verwendung nach Anspruch 1 oder Anspruch 2, worin die Innenschicht (2) des Schlauchs durch Extrusion gebildet wird.

4. Verwendung nach einem der vorhergehenden Ansprüche, worin im Schlauch das Verhältnis der radialen Dicke der Innenschicht innerhalb der Verstärkung zur gesamten radialen Dicke der Außenschicht oder Schichten außerhalb der Verstärkung zwischen 0,2:1 und 2:1 liegt.

5. Verwendung nach Anspruch 5, worin das Verhältnis zwischen 0,65:1 und 2:1 liegt.

6. Verwendung nach einem der vorhergehenden Ansprüche, worin keine zwischengelagerte Gummischicht zwischen hintereinander entgegengesetzt gewundenen Windungen Reifencord (3, 6) vorhanden ist.

7. Verwendung nach einem der vorhergehenden Ansprüche, worin die Außenschicht durch Schleifen abgerichtet wurde.

8. Peristaltische Pumpe umfassend als Schlauch, auf den ihre Quetschvorrichtung(en) wirkt/wirken, einen Schlauch mit einer inneren Gummischicht (2), einer Außenschicht (8) und einer Verstärkung (3, 6) dazwischen, wobei die Verstärkung (3, 6) durch zumindest zwei in entgegengesetzten Windungen gewickelte Schichten Reifencord gebildet wird.

9. Peristaltische Pumpe nach Anspruch 8, worin im Schlauch das Verhältnis der radialen Dicke der Innenschicht innerhalb der Verstärkung zur gesamten radialen Dicke der Außenschicht oder Schichten außerhalb der Verstärkung zwischen 0,2:1 und 2: 1 liegt.

10. Peristaltische Pumpe nach Anspruch 9, worin das genannte Verhältnis zwischen 0,65:1 und 2:1 liegt.

## Revendications

1. Utilisation d'un tube ayant une couche interne en caoutchouc (2), une couche externe (8) et une armature (3, 6) entre elles, l'armature (3, 6) étant constituée d'au moins deux couches de câbles enroulés en hélices opposées, en tant que tube d'une pompe péristaltique actionné par le ou les rotors péristaltiques d'une telle pompe.

2. Utilisation selon la revendication 1, selon laquelle la couche externe du tube comprend deux couches en caoutchouc non armé, une couche étant formée par enroulement d'une longueur (7) de caoutchouc non armé sur la couche la plus externe (6) de câble, la seconde couche étant formée par enroulement en hélice opposée d'une longueur (8) de caoutchouc non armé sur la première (7).

3. Utilisation selon la revendication 1 ou 2, selon laquelle la couche interne (2) du tube est formée par extrusion.

4. Utilisation selon l'une quelconque des revendications précédentes, selon laquelle dans le tube le rapport de l'épaisseur radiale de la couche interne dans l'armature sur l'épaisseur radiale totale de la ou des couches externes à l'extérieur de l'armature est compris entre 0,2:1 et 2:1.

5. Utilisation selon la revendication 4, selon laquelle le rapport est compris entre 0,65:1 et 2:1.

6. Utilisation selon l'une quelconque des revendications précédentes, selon laquelle il n'y a pas de couche en caoutchouc intermédiaire entre des enroulements successifs en hélices opposées de câbles (3, 6).

7. Utilisation selon l'une quelconque des revendications précédentes, selon laquelle la couche externe a été rectifiée par meulage.

8. Pompe péristaltique incorporant en tant que tube actionné par son ou ses rotors, un tube ayant une couche interne en caoutchouc (2), une couche externe (8) et une armature (3, 6) entre elles, l'armature (3, 6) étant constituée d'au moins deux couches de câbles enroulés en hélices opposées.

9. Pompe péristaltique selon la revendication 8, selon laquelle dans le tube le rapport de l'épaisseur radiale de la couche interne dans l'armature sur l'épaisseur radiale totale de la ou des couches externes à l'extérieur de l'armature est compris entre 0,2:1 et 2:1.

10. Pompe péristaltique selon la revendication 9, selon laquelle ledit rapport est compris entre 0,65:1 et 2:1.
